# EUROPÄISCHE PATENTSCHRIFT

(11) **EP 1 794 193 B1**
(45) Veröffentlichungstag und Bekanntmachung des Hinweises auf die Patenterteilung: **02.06.2010**
(21) Anmeldenummer: 05796822.4
(22) Anmeldetag: 30.09.2005
(51) Int. Cl.: C08F 2/02, B01F 5/10, B01F 15/02

(54) **VERFAHREN ZUR KONTINUIERLICHEN DURCHF]HRUNG VON POLYMERISATIONSPROZESSEN**
METHOD FOR THE CONTINUOUS IMPLEMENTATION OF POLYMERISATION PROCESSES
PROCEDE DE REALISATION CONTINUE DE PROCESSUS DE POLYMERISATION

(30) Priorität: 30.09.2004 DE 102004048044; 13.01.2005 DE 102005001802
(43) Veröffentlichungstag der Anmeldung: 13.06.2007
(73) Patentinhaber: LIST Holding AG, 4422 Arisdorf (CH)
(72) Erfinder: FLEURY, Pierre-Alain, CH-4433 Ramlinsburg BL (CH); ISENSCHMID, Thomas, CH-4312 Magden AG (CH); LIECHTI, Pierre, CH-4132 Muttent BL (CH)
(74) Vertreter: Weiss, Peter
(86) Internationale Anmeldenummer: PCT/EP2005/010584
(87) Internationale Veröffentlichungsnummer: WO 2006/034875

(56) Entgegenhaltungen:
- EP-A- 0 517 068
- EP-A- 1 384 728
- EP-B- 0 853 491
- WO-A-02/089963
- WO-A-03/035235
- DE-A1- 2 349 106
- DE-A1- 10 303 167
- GB-A- 1 524 433
- US-A- 5 921 675

## Beschreibung

Die Erfindung betrifft ein Verfahren zur kontinuierlichen Durchführung von Polymerisationsprozessen nach Anspruch 1.

### Stand der Technik

Ein beträchtlicher Teil von Polymerisationsreaktionen insbesondere zur Herstellung von homo- und co-polymeren Thermoplasten und Elastomeren werden kommerziell als "Slurry or Solution Process" in einem oder mehreren hintereinandergeschalteten kontinuierlich betriebenen, rückgemischten, vertikalen Rührkesselreaktoren sog. "CSTR" continuous stirred tank reactors, durchgeführt. Dies wird u.a. auch in der GB 1 524 433 gezeigt.

Diese Rührkesselreaktoren haben die Aufgabe, die Monomere, die Katalysatoren und Initiatoren in einem Lösemittel/Verdünnungsmittel bei genau definierten Prozessbedingungen, wie Temperatur und Druck, möglichst homogen zu verteilen, damit die Reaktion kontrolliert abläuft, eine gleichmässige Produktqualität mit der gewünschten Molmasse entsteht und ausserdem die Reaktionswärme beherrscht wird.

Die Problematik dieser Rührkesselreaktoren besteht nun darin, dass nur Produkte mit einer niedrigen scheinbaren Viskosität verarbeitet werden können. Bei steigender Konzentration des Polymers im Lösemittel/Verdünnungsmittel steigt die scheinbare Viskosität der Reaktionsmasse derart an, dass der Rührer schliesslich keine ausreichende konvektive Strömung erzeugen kann. Die Folge davon ist eine inhomogene Verteilung der Monomere. Dies führt zu Klumpenbildung, schlechter Molemasseverteilung, Anbackungen, örtlichen Überhitzungen bis hin zum unkontrollierbaren Reaktionsablauf des ganzen Reaktorinhalts.

Ein weiteres Problem von Rührkesselreaktoren ist bei einzelnen Produkten die Schaumbildung, welche bei den Dampfabzügen zu Verstopfungen führen kann.

Die oben genannten Prozessgefahren führen dazu, dass Rührkesselreaktoren mit einem grossen Überschuss an Lösemittel/Verdünnungsmittel bis zu ca. 90 % der Reaktionsmasse betrieben oder bei Bulkpolymerisationen nur Umsätze von weniger als 50% erzielt werden können. Als Folge davon werden zusätzliche Verfahrensschritte zur mechanischen/thermischen Abtrennung des Verdünnungsmittesl/Lösemittels/Monomers resp. zur Nachreaktion notwendig. Dies geschieht in der Regel in Entwässerungsschnecken, Eindampf- und Trocknungsanlagen sowie Reifungstanks. Sie bedeuten hohe Investitions-, Energie- und Betriebskosten. Es gibt auch neue Polymere, die nicht mit "Water Stripping Process" verarbeitbar sind!

Bulkpolymerisationen werden auch in ein- oder mehrwelligen Extrudern (z.B. von Werner Pfleiderer, Buss-Kneter, Welding Engineers, etc.) kontinuierlich durchgeführt. Diese Apparate sind für Polymerisationen in der viskosen Phase bis zu hohen Umsätzen konzipiert. Sie sind als kontinuierliche Pfropfenströmungsreaktoren konstruiert und haben dementsprechend ein grosses L/D Verhältnis von > 5 bis ca. 40.

Hier treten folgende Probleme auf:
a) Bei langsamen Polymerreaktionen mit Reaktionszeiten > 5 Minuten, bei welchen die Reaktionsmasse lange im flüssigen Zustand bleibt, lässt sich die Pfropfenströmung nicht aufrechterhalten. Die stark unterschiedlichen rheologischen Eigenschaften zwischen den Monomeren und Polymeren verhindern einen gleichmässigen Produkttransport, was zu unerwünschten Qualitätsschwankungen führt.
b) Die starke Exothermie vieler Polymerisationsprozesse sowie die dissipierte Knetenergie machen es häufig erforderlich, diese Energien über eine Verdampfungskühlung abzuführen. Dabei wird ein Teil d es Monomers oder eines beigemischten Lösemittels/Verdünnungsmittels verdampft, in einen externen Kondensator kondensiert und das Kondensat in den Reaktor rückgeführt. Aufgrund des grossen L/D Verhältnisses und des konstruktiv bedingten grossen Schneckenquerschnitts stehen für den Abzug von Dämpfen nur sehr beschränkte freie Querschnittsflächen zur Verfügung. Dies führt zum unerwünschten Mitreissen von Polymeren in die Brüdenleitungen und in den Rückflusskondensator und als Folge davon zu Verstopfungen.
c) Bei der Herstellung von (Co-) Polymeren aus mehreren unterschiedlichen Monomeren kommt erschwerend hinzu, dass für die Verdampfungskühlung hauptsächlich das Monomer mit dem niedrigsten Siedepunkt verdampft, so dass sich im Reaktor eine Verschiebung der Monomerkonzentrationen einstellt, insbesondere im Bereich der Eintrittsöffnung des Kondensatrückflusses. Dies ist in der Regel unerwünscht.
d) Nachteilig ist ausserdem, dass das freie Produktvolumen von Schnecken aus mechanisch konstruktiven Gründen auf etwa 1,5 m³ beschränkt ist, so dass bei Reaktionen mit Verweilzeiten >5 Minuten nur niedrige Durchsätze erzielt werden können, was die Installation von mehreren parallelen Linien mit entsprechend hohen Investitions- und Betriebskosten erfordert.

Eine weitere Möglichkeit zur Durchführung von Bulkpolymerisationen bis zu hohen Umsätzen wird in der US 5.372,418 beschrieben. Hier werden gleich oder gegenläufige Mehrschneckenextruder mit nicht kämmenden, in gegensätzlicher Richtung fördernden Schnecken oder Schneckenpaaren zur Polymerisation der Monomere durch Rückvermischung mit dem Polymer in der viskosen Phase beschrieben. Diese Apparate sind grundsätzlich in der Lage, Polymerisationsprozesse bis zu hohen Umsätzen durchzuführen und gleichzeitig die vorher beschriebenen Nachteile a) (Zusammenbruch der Pfropfenströmung) und c) (Rezepturverschiebung durch Rückfluss) vom Pfropfenströmungsextruder zu vermeiden. Ungelöst bleiben aber nach wie vor die vorher beschriebenen Probleme b) (reduzierte; freier Querschnitt) und d) (Baugrösse).

### Aufgabe

Aufgabe der Erfindung ist es ein Verfahren und eine entsprechende Anlage zu finden, die es erlauben, langsame im Bereich von 5 und 60 Minuten liegende (Co-)Polymerisationsreaktionen von Thermoplasten und Elastomeren derart durchzuführen, dass
- ohne oder mit sehr wenig Lösemittelüberschuss, typischer Weise < 20 % der Reaktionsmasse, und bei Viskositäten, die 5x10⁴ - 5x10⁶ höher liegen als im Rührkessel, gearbeitet werden kann, d.h. der unbeliebte Verfahrensschritt der mechanisch/thermischen Lösemittelabtrennung eliminiert werden kann,
- bei (Co-)Polymerisationen Umsetzungsraten von 80 - 95 % erlaubt sind,
- bei langsamen Reaktionen grosse Durchsätze bis zu 10 t/h bei gleichbleibender Qualität erlaubt sind,
- eine Schaumbildung dank der erhöhten Polymerkonzentration weitgehend vermieden wird,
- die entstehende Reaktionswärme und dissipierte Energie mittels einer Verdampfungskühlung abgeführt werden kann, d.h. für die Dämpfe grosse freie Querschnitte zur Verfügung stehen,
- die zur Kühlung verwendeten Lösemittel oder Monomere wieder an den Ort der Verdampfung zurückgebracht werden, so dass keine Rezepturänderung in der Reaktionsmasse entsteht. Dies ist insbesondere bei (Co-)Polymerisationen von grosser Wichtigkeit.

### Lösung der Aufgabe

Zur Lösung der Aufgabe führt ein Verfahren gemäss Anspruch 1. Es wurde gefunden, dass sich sowohl Homo- als auch Copolymerisationsreaktionen mit Verweilzeiten > 5 Minuten in der hochviskosen Phase, d.h. ohne oder mit sehr wenig Lösemittel (< 20 %)bis zu einem Umsatz von 80 bis 95 % erfolgreich in Mischknetern ausführen lassen, bei denen das (die) Monomer(e), Katalysatoren, Initiatoren etc. kontinuierlich einem rückgemischten Mischkneter zugegeben, darin mit dem bereits reagierten Produkt rückgemischt werden und gleichzeitig das reagierte Produkt aus dem Mischkneter kontinuierlich abgezogen wird.

Die mittlere Verweilzeit wird über den "Hold-up" so eingestellt, dass sowohl die Reaktionszeit als auch mindestens eine 5fache Rückmischzeit erreicht wird.

Der Mischkneter weist folgende apparativen Merkmale auf:
- Das L/D Verhältnis liegt zwischen 0,5 bis 3,5.
- Alle, sowohl die dynamischen als auch statischen Misch- und Knetelemente sind selbstreinigend, randgängig und vermeiden durch ihre Anordnung und Ausformung tote ungemischte Zonen.
- Die Rückmischung erfolgt durch entsprechende Ausgestaltung der Misch- und Knetelemente im Apparat selbst oder durch eine aussen liegende ein- oder mehrwellige Rückführschnecke.
- Der Produktraum ist nur teilweise gefüllt, so dass für den Abzug von Dämpfen ein genügend grosser freier Querschnitt vorhanden ist.

Mischkneter, welche ein- oder zweiwellig , gleich- oder gegenläufig sein können, werden in den DE 2349106 A1, EP 0517068 A1, EP 0853 491 A1, DE 10150900 C1 (PCT/EP02/11578; WO 03/035235A1) detailliert beschrieben. Sie werden bis zu einer Grösse von 10'000 Liter freiem Volumen hergestellt.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine schematische Darstellung einer erfindungsgemässen Anlage zur Homo- oder Copolymerisation von Thermoplasten und Elastomeren;
Figur 2 eine schematische Darstellung eines weiteren Ausführungsbeispiels einer erfindungsgemässen Anlage entsprechend Figur 1;
Figur 3 eine schematische Darstellung eines weiteren Ausführungsbeispiels einer Anlage zur Durchführung des Verfahrens entsprechend Figur 1.

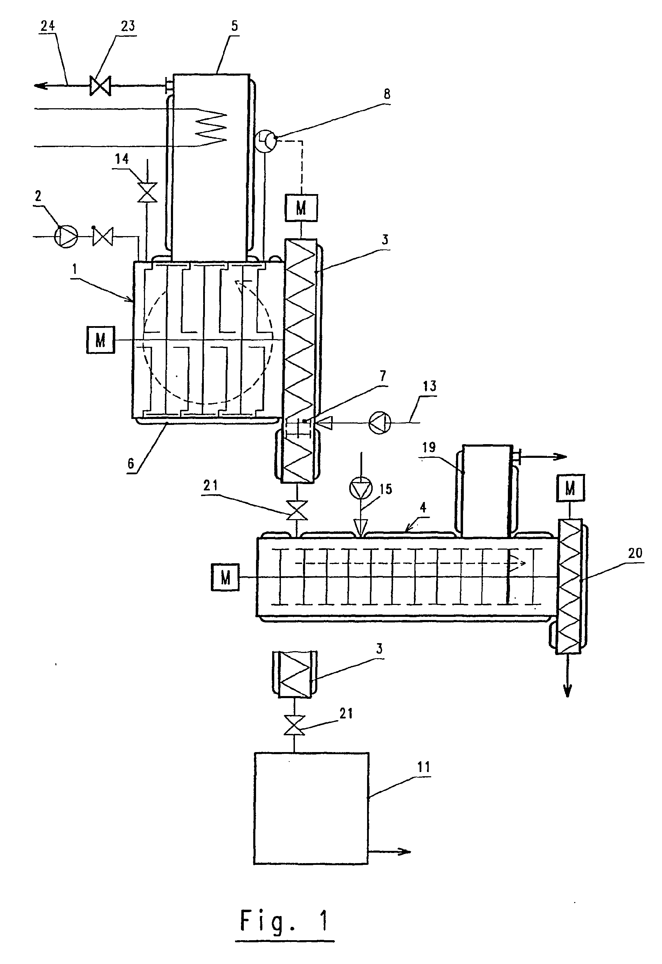

Gemäss Figur 1 werden in einem einwelligen, von einem Heizmantel 6 umgebenen Mischkneter 1 mit rückmischender Rührwellengeometrie, welcher teilweise mit reagiertem Produkt gefüllt ist, kontinuierlich Monomer(e), Katalysatoren, Initiatoren und eventuell kleine Mengen an Lösemittel über entsprechende Dosiereinrichtungen 2 eingetragen und im Prozessraum rückgemischt. Gleichzeitig wird das Reaktionsprodukt, z.B. mittels einer angebauten Austragschnecke 3 derart abgezogen, dass der Füllgrad, gemessen mit einer Einrichtung 8, die auch mit einem Motor M für die ein- oder zweiwellige Austragsschnecke 3 ein- oder zweiwellig verbunden ist, im Mischkneter konstant bleibt. Die Viskosität der Reaktionsmasse wird dabei durch die Wahl der Reaktionsparameter wie Durchsatz, Temperatur und Lösemittel/Monomer-Anteil so eingestellt, dass in einem nachfolgenden LIST-Restentgaser oder Extruder 4 direkt devolatilisiert oder das unreagierte Monomere in einer nachfolgenden Apparatur z.B. einem Reifungstank 11 ausreagiert werden kann.

Reaktionstemperatur und -druck werden vorzugsweise derart gewählt, dass sich der Monomerüberschuss resp. der Lösemittelanteil im Siedebereich befindet. Damit ist es möglich, die Reaktionswärme und die dissipierte Knetenergie durch das verdampfende Lösemittel/Monomer abzuführen. Dieser Dampf wird in einem auf dem Kneter aufgesetzten Rückflusskondensator 5 kondensiert und in die Reaktionsmasse zurückgegeben. Mehrere Rückflusskondensatoren können auch auf der Länge verteilt werden. Die Kondensation kann auch extern realisiert werden und das Kondensat wird mit verschiedenen Düsen zurück auf die Polymermasse homogen zudosiert.

Durch das kleine UD (Länge/Durchmesser)-Verhältnis des Mischkneters 1 wird das rückfliessende Kondensat optimal gleichmässig im Reaktor zurückgemischt, was, wie vorher erwähnt, bei rückmischenden Extrudern mit einem grossen L/D Verhältnis ein grosses Problem darstellt.

Der rückgemischte Knetreaktor 1 kann unter Vakuum, atmosphärisch oder unter Druck fahren. Für Polymerisationssysteme, welche mit Vakuum betrieben werden, wird ein Ventil 23 geöffnet und die Leitung 24 an einer Vakuumpumpe angeschlossen. Für Polymerisationssysteme, welche atmosphärisch betrieben werden, wird das Ventil 23 geöffnet und die Leitung unter atmosphärischen Bedingungen gelassen.

Für Polymerisationssysteme, welche mit Drücken höher als Umgebungsdruck betrieben werden, wird bevorzugt mit einem Inertgas (z.B. N₂) der Systemdruck auf einen bestimmten Wert geregelt, was mittels eines Ventils 14 geschieht. Das Ventil 23 ist in dem Fall geschlossen.

Die Austragsschnecke 3 kann ausserdem mit Mischelementen 7 zum Einmischen von über eine Zuleitung 13 zugeführten Reaktionsstoppern, Stabilisatoren oder ähnlichem sowie mit Stauelementen zum Aufbau eines gasdichten Produktstopfens bei Druck- oder Vakuumbetrieb des Mischkneters 1 ausgerüstet sein. Optional können Reaktionsstopper/Stabilisatoren über eine Leitung 15 vor dem oder in den Entgaser 4 zudosiert werden.

Dem Entgaser 4 ist ein Motor M zugeordnet, über den eine oder mehrere Rührwelle(n) 17 mit Rühr-/Knetelementen 18 in dem Entgaser 4 angetrieben werden. Die Rührwellengeometrie ist so ausgestaltet, dass eine Pfropfenströmung resultiert. Ferner sind dem Entgaser 4 ein oder mehrere Brüdendom(e) 19 aufgesetzt, über den/die verdampfende Produkte abgezogen werden können.

An den Entgaser 4 schliesst eine weitere Austragsschnecke 20 an, die wiederum von einem Motor M angetrieben ist. Der Entgaser 4 wird normalerweise unter Vakuum betrieben. Das Ventil 21 oder an dessen Stelle eine Eintragszahnradpumpe bauen einen gasdichten Produktsstopfen auf und lassen das eingetragene Produkt im Entgaser 4 durch Druckdifferenz flashen. Der Entgaser 4 wärmt das von dem Flash abgekühlte Produkt dank der Knetenergie auf.

An der Austragsschnecke 20 wird normalerweise eine Austragszahnradpumpe angeflanscht, um einen "Pelletizer" anzuspeisen.

Durch die Austragsschnecke 3 kann das Produkt optional, wie oben erwähnt, über das Ventil 21 in den Reifungstank 11 eingegeben werden, aus dem es nach einer Reifung ausgetragen wird.

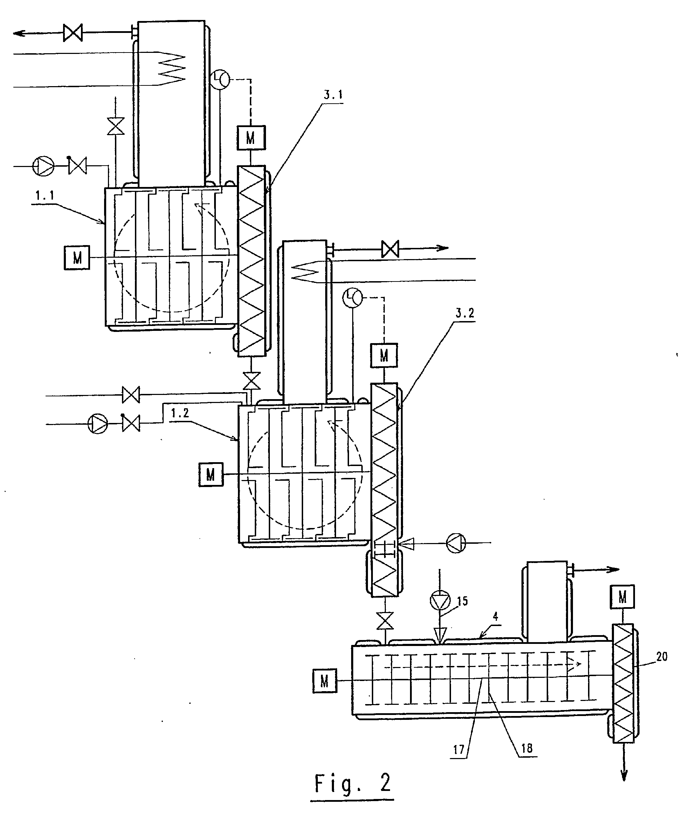

In Figur 2 sind mehrere hintereinander geschaltete Mischkneter 1.1, 1.2 mit Austragsschnecke 3.1, 3.2 dargestellt, um beispielsweise für eine Aufpfropfpolymerisation die einzelnen Mischkneter 1.1, 1.2 mit unterschiedlichen Monomeren zu beschicken oder um die Molmasseverteilung im Polymer zu beeinflussen. An den Mischkneter 1.2 schliesst der Extruder 4 an.

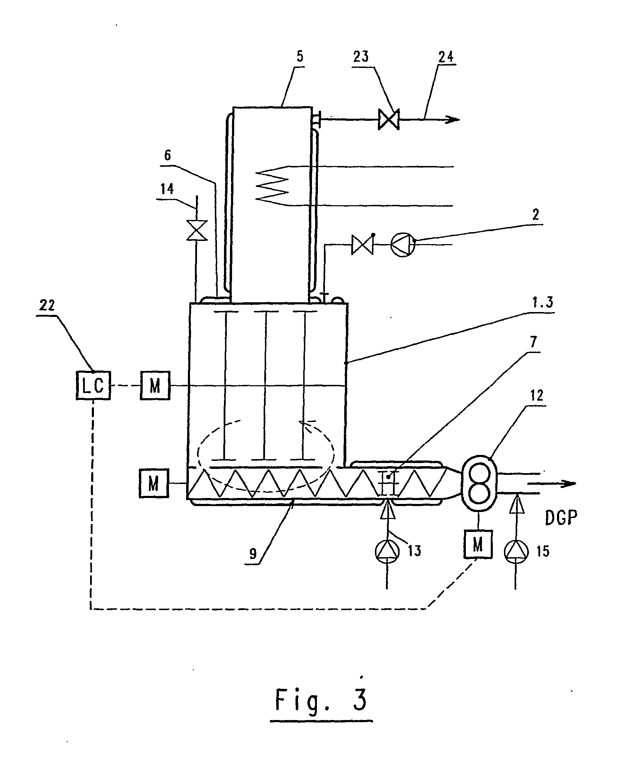

In Figur 3 ist das Verfahren ähnlich Figur 1 dargestellt, mit dem Unterschied, dass der Mischkneter 1.3 mit einer externen ein- oder zweiwellige Rückführschnecke 9 ausgerüstet ist, welche sowohl die Rückmischung als auch den kontinuierlichen Produktaustrag bewerkstelligt.

Eine nachgeschaltete Zahnradpumpe 12 oder ein Ventil, welches über eine Steuereinrichtung 22 mit dem Motor M des Mischkneters 1.3 verbunden ist, regelt den Füllgrad im Mischkneter.

Die einwellige oder zweiwellige Rückführschnecke 9 bestimmt den Recyclierungsgrad, d.h., das Verhältnis des im Reaktor umgewälzten Massestromes zum ausgetragenen Massestrom.

### Beispiel 1

### Kontinuierliche Massepolymerisation von MMA oberhalb des Glaspunkts (neues Verfahren).

Der rückgemischte LIST-Knetreaktor 1-1.2 hat ein Totalvolumen von 6 Litern, und das Gehäuse wird mit einer Vorlauftemperatur von 145°C temperiert. Auf dem Knetreaktor steht ein gekühlter Dom, Wandtemperatur 15°C, der die Monomerbrüden zurück in den Prozessraum kondensiert. Eine Austragsdoppelschnecke (3-3.2) ist auf der Stirnseite des Reaktors (1-1.2) angebracht und trägt die Polymermasse mit gleichem Durchsatz wie der zudosierte Monomerstrom aus. Der Mantel der Austragdoppelschnecke (3-3.2) ist auf 210°C beheizt. Ein beheiztes Ventil ist nach der Austragdoppelschnecke installiert, um die Dichtheit des Systems für das Anfahren sicherzustellen. Der Monomer Feedtank und der Knetreaktor werden vor dem Anfahren mit Stickstoff (N₂) inertisiert. Der Innendruck im Reaktor ist mit Inertgas (N₂) auf 3.5 bar absolut eingestellt. Die Monomerzudosierung ist mit einem Monomertank vorgesehen, in dem der Initiator DTBP mit 4 g/kg Monomer schon eingemischt ist. Eine Pumpe dosiert die Monomermischung gegen ein Druckhaltventil in den Reaktor.

Mit einem Durchsatz von 10 kg/h hat die Massepolymerisation von MMA einen Umsatz von 90% erreicht. Die mittlere Verweilzeit beträgt 20 Minuten. Die Reaktionswärme und der Eintrag von Knetenergie werden durch die Verdampfung des Monomers abgeführt. Die Monomerbrüden werden mittels Refluxkondensation zurück in die Polymermasse eingemischt. Das Molekulargewicht (Massenverteilung, Mw) von 84'000 g/Mol wurde erreicht. Diese Polymermasse kann dann einem Restentgaser 4 (LIST-Restentgaser oder Extruder) zudosiert werden, um die restlichen 10 % Monomer zu trennen und zu recyklieren.

Das bisherige Produktionsverfahren wurde in einem Rührkesselreaktor realisiert und war auf einen Monomerumsetzungsgrad von maximal 50% limitiert, infolge des Anstiegs der Viskosität während der Polymerisation. In diesem Fall musste in der Restentgasungsstufe noch 50% von der gesamten Monomermenge abgetrennt werden. Das neue, oben beschriebene Verfahren zeigt eine deutliche Verbesserung, weil die zu entfernenden Monomermengen, im Vergleich zum heutigen Produktionsverfahren, in der Restentgasungsstufe 5 mal niedriger sind.

Die Polymerisationskinetik von MMA ist unter "monomer coupling system with termination" klassifiziert. In so einem Kinetiksystem ist eine Erniedrigung des Molekulargewichts bei Erhöhung des Umsatzes zu erwarten. Dies zeigt einen weiteren Vorteil für das neue Verfahren bei 90% Umsatz gegenüber dem bisherigen Verfahren: Die regulierenden Additive ("chain transfer agents") können reduziert oder eliminiert werden, um gezielte Molekulargewichte zwischen 60'000 - 70'000 g/Mol für Anwendungen wie DVD oder ähnliche zu erreichen.

### Bemerkung:

Die PMMA Kinetik ist im Umsatz bei dieser Temperatur (145°C) wegen dem Gleichgewicht Polymerisation - Depolymerisation auf unter 100% limitiert. Es existieren aber andere Polymerisationssysteme, wo ein höherer Umsatz bis zu 100% möglich ist. In so einem Fall kann der Umsatz in einem zum LIST-Knetreaktor nachgeschalteten Reifungstank 11 erhöht werden. In diesem Fall werden bevorzugt Reifungstanks 11 eingesetzt, weil damit die Restpolymerisation wirtschaftlicher durchgeführt werden kann.

Ein Reifungstank 11 kann ein adiabater Batchtank sein, wo die Polymermasse zusätzliche Verweilzeit bekommt, um die Reaktion unter adiabaten Bedingungen so vollständig wie möglich zu Ende zu führen. Solche Batchtanks können auch als Lagertanks betrachtet werden. In diesem Fall wird nach einer bestimmten Verweilzeit in diesen Lagertanks die Polymermasse mittels einer Pressvorrichtung für den nächsten Verarbeitungsschritt aus dem Tank gepresst.

Der Reifungstank 11 kann auch kontinuierlich betrieben werden. In diesem Fall wird die Polymermasse unter adiabaten Bedingungen möglicherweise mittels einer Rührwelle durch den Tank gefördert, um eine bestimmte Verweilzeit zu erreichen.

### Beispiel 2

Aus der EP 0 209 253 A1 (Manufacture of butyl rubber) ist ein kontinuierliches Polymerisationsverfahren von Butyl-Kautschuk in einem Extruder bekannt. Hier werden die Monomere in einem halogenierten Polymerisationsmedium bei konstantem Druck unter Siedebedingungen und Pfropfenströmung, unter Verwendung eines modifizierten Aluminiumkatalysators, polymerisiert. Dabei verwandelt sich das dünnflüssige Monomer mit fortschreitender Reaktion in ein zähviskoses klebriges Polymer.

Es hat sich gezeigt, dass aufgrund des riesigen Viskositätsunterschieds zwischen Monomer und Polymer sich die gewünschte Pfropfenströmung im Extruder nicht aufrechterhalten lässt, weil der grosse Anteil an dünnflüssigem Monomer die Pfropfenströmung unterwandert und den auf dem Schergefälle beruhenden Produkttransport im Reaktor verhindert. Dies führt dazu, dass es praktisch unmöglich ist, einen gleichmässigen Produkttransport und damit homogene Umsatzraten zu erzeugen.

Bei der Verwendung eines rückgemischten Mischkneters 1-1.3 gemäss vorliegender Erfindung kann dieses Problem elegant vermieden werden, da die vergleichsweise kleine Menge Monomer im ganzen Reaktor gleichmässig verteilt wird und so überall die selbe Produktrheologie herrscht.

**Bezugszeichenliste**

| | | | | | |
|---|---|---|---|---|---|
| 1 | Mischkneter/Reakter | 34 | | 67 | |
| 2 | Dosiereinrichtung | 35 | | 68 | |
| 3 | Austragsschnecke | 36 | | 69 | |
| 4 | Extruder/Entgaser | 37 | | 70 | |
| 5 | Rückflusskondensator | 38 | | 71 | |
| 6 | Heizmantel | 39 | | 72 | |
| 7 | Mischelemente | 40 | | 73 | |
| 8 | Einrichtung zu m Messen des Füllgrades | 41 | | 74 | |
| 9 | Rückführschnecke | 42 | | 75 | |
| 10 | | 43 | | 76 | |
| 11 | Reifungstank | 44 | | 77 | |
| 12 | Zahnradpumpe | 45 | | 78 | |
| 13 | Zuleitung | 46 | | 79 | |
| 14 | Ventil | 47 | | | |
| 15 | Leitung | 48 | | | |
| 16 | | 49 | | | |
| 17 | Rührwelle | 50 | | | |
| 18 | Riebelemente | 51 | | | |
| 19 | Brüdendom | 52 | | | |
| 20 | Austragsschnecke | 53 | | | |
| 21 | Ventil | 54 | | | |
| 22 | Steuereinrichtung | 55 | | | |
| 23 | Ventil | 56 | | | |
| 24 | Leitung | 57 | | M | Motoren |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Verfahren zur kontinuierlichen Durchführung von Polymerisationsprozessen, insbesondere zur Homo- oder Copolymerisation von Thermoplasten und Elastomeren, wobei Monomer(e), Katalysatoren, Initiatoren kontinuierlich einem rückgemischten, horizontalen Mischkneter (1-1.3) mit einem Längen/Durchmesserverhältnis von 0,5 - 3,5 und ein oder zwei gleich-oder gegenläufig, horizontal angeordneten Knetwellen zugegeben werden, wobei dieser nur teilweise gefüllt wird, darin mit bereits reagiertem Produkt rückgemischt werden, wobei die Rückmischung intern über die entsprechende Ausgestaltung und Anordnung der Misch-Transport- und Knetelemente erfolgt oder der Mischkneter (1.3) mit einer externen Rückführeinrichtung (9) ausgerüstet ist oder die Rückmischung über axial verteilte Feeddosierstellen erfolgt, und gleichzeitig das reagierte Produkt aus dem Mischkneter (1-1.3) kontinuierlich abgezogen wird, wobei die Reaktionswärme und die Knetenergie durch Verdampfung des Monomers oder Lösemittels abgeführt werden, die Dämpfe in einem oder mehreren Rückflusskondensator(en) (5) kondensiert und in den partiell gefüllten, rückgemischten Mischkneter (1-1.3) zurückgeführt werden.

2. Verfahren nach Anspruch 1, **dadurch gekennzeichnet, dass** zur Herstellung von (Co-) Polymeren mehrere Mischkneter (1.1, 1.2, 1.3) hintereinander geschaltet werden, welche mit unterschiedlichen Monomeren beschickt und/oder mit unterschiedlichen Reaktionsbedingungen betrieben werden.

3. Verfahren nach Anspruch 1 oder 2, **dadurch gekennzeichnet**, das die Viskosität und Reaktionsparameter im Mischkneter (1-1.3) so eingestellt werden, dass eine Schaumbildung vermieden wird.

4. Verfahren nach einem der Ansprüche 1 bis 3, **dadurch gekennzeichnet, dass** der Druck im Mischkneter (1-1.3) mittels eines Inertisierungsmittels auf einen bestimmten Wert geregelt wird.

5. Verfahren nach einem der Ansprüche 1 bis 4, **dadurch gekennzeichnet, dass** ein oder mehrere Reaktionsstopper einem dem Mischkneter (1-4.3) nachgeschalteten Restentgaser (4) zugegeben werden und dieses zugegebene Medium gleichzeitig als Stripmittel für die Entgasung von Restlösemittel und/oder Monomer (e) dient.

6. Anlage zur Homo- oder Copolymerisation von Thermoplasten und Elastomeren mit einem Mischkneter (1-1.3) geeignet zur Durchführung des Verfahrens nach weinigstens einem der Ansprüche 1 bis 5, **dadurch gekennzeichnet, dass** der Mischkneter die nachfolgenden Merkmale aufweist:
• Eine oder zwei gleich- oder gegenläufige, horizontal angeordnete Knetwelle/n,
• Längen/Durchmesserverhältnis (UD) 0,5-3,5.
• Die dynamischen und statischen Misch- und Knetelemente sind weitgehend selbstreinigend und randgängig, damit tote ungemischte Zonen und Anbackungen vermieden werden.
• Die Rückmischung erfolgt intern über die entsprechende Ausgestaltung und Anordnung der Misch-Transport- und Knetelemente, oder der Mischkneter (1.3) ist mit einer externen Rückführeinrichtung (9) ausgerüstet, oder die Rückmischung erfolgt über axial verteilte Feeddosierstellen.

7. Anlage nach Anspruch 6, **dadurch gekennzeichnet, dass** zum Austragen des Produktes am Mischkneter (1-1.3) direkt eine ein- oder zweiwellige Austragschnecke (3-3.2, 9) angebaut ist.

8. Anlage nach Anspruch 7, **dadurch gekennzeichnet, dass** die Schnecke (34.2, 9) mit einer Mischzone (7) ausgerüstet ist, über welche Reaktionsstopper oder Additive einmischbar sind.

9. Anlage nach Anspruch 7 oder 8, **dadurch gekennzeichnet, dass** die Austragschnecke (3-3.2, 9) mit einer gasdichten Stopfzone gegen Druck oder Vakuum ausgerüstet ist.

10. Anlage nach wenigstens einem der Ansprüche 6 bis 9, **dadurch gekennzeichnet, dass** der externen Rückführeinrichtung (9) oder den Austragsschnecken (34.2) eine Zahnradpumpe (12) nachgeschaltet ist.

11. Anlage nach Anspruch 10, **dadurch gekennzeichnet, dass** die Zahnradpumpe (12, 21) steuertechnisch mit einem Motor (M) für den Mischkneter (11.3) in Verbindung steht.

12. Anlage nach wenigstens einem der Ansprüche 6 bis 11, **dadurch gekennzeichnet, dass** auf die Schnecke (3-3.2, 9) ein Entgaser (4) zum Entgasen des Produktes folgt.

13. Anlage nach Anspruch 12, **dadurch gekennzeichnet, dass** vor oder in den Entgaser (4) über eine Leitung (15) Reaktionsstopper/Stabilisatoren einmischbar sind.

14. Anlage nach Anspruch 12 oder 13, **dadurch gekennzeichnet, dass** an den Entgaser (4) eine Austragsschnecke (20) angeflanscht ist.

15. Anlage nach Anspruch 6 bis 14, **dadurch gekennzeichnet, dass** optional auf die Austragsschnecke (3-3.2, 9) ein Reifungstank (11) zum Ausreagieren des Restmonomeranteils folgt.

## Claims

1. A method of continuously carrying out polymerization processes, in particular for the homo- or co-polymerization of thermoplastics and elastomers, wherein monomers, catalysts, initiators are continuously fed to a back-mixed horizontal kneader mixer (1 to 1.3) with a length / diameter ratio of from 0·5 to 3·5 and one or two kneading shafts which run in the same or opposed directions and which are arranged horizontally, wherein the said kneader mixer (1 to 1.3) is filled only in part, and back-mixing takes place therein with the already reacted product, wherein the back-mixing is carried out internally by way of the corresponding shaping and arrangement of the mixing-conveying and kneading elements or the kneader mixer (1.3) is provided with an external recirculation device (9) or the back-mixing is carried out by way of axially distributed feed-metering points, and at the same time the reacted product is continuously withdrawn from the kneader mixer (1 to 1.3), wherein the reaction heat and the kneading energy are dissipated by evaporation of the monomer or solvent, the vapours are condensed in one or more return-flow condensers (5) and are fed back into the partially filled, back-mixed kneader mixer (1 to 1.3).

2. A method according to Claim 1, **characterized in that**, in order to produce (co-)polymers, a plurality of kneader mixers (1.1, 1.2, 1.3), which are charged with different monomers and/or are operated under different reaction conditions, are arranged one behind the other.

3. A method according to Claim 1 or 2, **characterized in that** the viscosity and reaction parameters in the kneader mixer (1 to 1.3) are set in such a way as to prevent the formation of foam.

4. A method according to any one of Claims 1 to 3, **characterized in that** the pressure in the kneader mixer (1 to 1.3) is regulated to a specified value by means of an inerting agent.

5. A method according to any one of Claims 1 to 4, **characterized in that** one or more reaction stoppers are fed to a residual de-gasser (4) arranged downstream of the kneader mixer **(1** to 4.3), and the said added medium is used at the same time as a stripping agent for the de-gassing of residual solvent and/or monomer.

6. A plant for the homo- or co-polymerization of thermoplastics and elastomers with a kneader mixer (1 to 1.3) suitable for performing the method according to at least one of Claims 1 to 5, **characterized in that** the kneader mixer has the following features:
• One or two kneading shafts which run in the same or opposed directions and which are arranged horizontally.
• A length / diameter ratio (**L/D**) of from 0·5 to 3·5.
• The dynamic and static mixing and kneading elements are substantially self-cleaning and have accessible edges, so that dead non-mixed zones and caking are prevented,
• The back-mixing is carried out internally by way of the corresponding shaping and arrangement of the mixing-conveying and kneading elements, or the kneader mixer (1.3) is provided with an external recirculation device (9), or the back-mixing is carried out by way of axially distributed feed-metering points.

7. A plant according to Claim 6, **characterized in that**, in order to discharge the product, a single-shaft or two-shaft discharge screw conveyor (3 to 3.2, 9) is attached directly to the kneader mixer (1 to 1.3),

8. A plant according to Claim 7, **characterized in that** the screw conveyor (34.2, 9) is provided with a mixing zone (7) by way of which it is possible for reaction stoppers or additives to be mixed in

9. A plant according to Claim 7 or 8, **characterized in that** the discharge screw conveyor (3 to 3.2, 9) is provided with a gas-tight plugging zone against pressure or vacuum.

10. A plant according to at least one of Claims 6 to 9, **characterized in that** a gear-type pump (12) is arranged downstream of the external recirculation device (9) or the discharge screw conveyors (34.2).

11. A plant according to Claim 10, **characterized in that** the gear-type pump (12, 21) is connected in terms of control to a motor **(M)** for the kneader mixer (11.3).

12. A plant according to at least one of Claims 6 to 11, **characterized in that** a de-gasser (4) for de-gassing the product follows after the screw conveyor (3 to 3.2, 9).

13. A plant according to Claim 12, **characterized in that** reaction stoppers or stabilizers are capable of being mixed in upstream of or in the de-gasser (4) by way of a line (15).

14. A plant according to Claim 12 or 13, **characterized in that** a discharge screw conveyor (20) is flange-mounted on the de-gasser (4).

15. A plant according to Claims 6 to 14, **characterized in that** a conditioning tank (11) for reacting out the residual monomer portion optionally follows after the discharge screw conveyor (3 to 3.2, 9).

## Revendications

1. Procédé pour réaliser en continu des processus de polymérisation, en particulier d'homopolymérisation ou de co-polymérisation de matières thermoplastiques et d'élastomères, un ou des monomères, des catalyseurs, des initiateurs étant ajoutés en continu à un mélangeur-pétrisseur horizontal à rétromélange (1-1.3) avec un rapport longueur/diamètre de 0,5 à 3,5 et un ou deux arbres de pétrissage disposés horizontalement et tournant dans le même sens ou en sens contraire, ce dernier n'étant rempli que partiellement, y sont rétromélangés avec du produit déjà réagi, le rétromélange ayant lieu intérieurement grâce à la réalisation et disposition correspondante des éléments de mélange, de transport et de pétrissage ou le mélangeur-pétrisseur (1.3) étant équipé d'un dispositif de retour externe (9) ou le rétromélange ayant lieu via des points de dosage d'alimentation répartis axialement et le produit réagi étant simultanément extrait en continu du mélangeur-pétrisseur (1-1.3), la chaleur de réaction et l'énergie de pétrissage étant évacuées par évaporisation du monomère ou du solvant, les vapeurs étant condensées dans un ou plusieurs condensateurs de retour (5) et étant retournées vers le mélangeur-pétrisseur rétromélangé (1-1.3) partiellement rempli.

2. Procédé selon la revendication 1, **caractérisé par le fait que** pour la production de (co)-polymères sont connectés l'un après l'autre plusieurs mélangeurs-pétrisseurs (1.1, 1.2, 1.3) qui sont chargés en monomères différents et/ou fonctionnent dans des conditions de réaction différentes.

3. Procédé selon la revendication 1 ou 2, **caractérisé par le fait que** la viscosité et les paramètres de réaction dans le mélangeur-pétrisseur (1-1.3) sont réglés de sorte que soit évitée une formation d'écume.

4. Procédé selon l'une des revendications 1 à 3, **caractérisé par le fait que** la pression dans le mélangeur-pétrisseur (1-1.3) est réglée à l'aide d'un agent d'inertisation à une valeur déterminée.

5. Procédé selon l'une des revendications 1 à 4, **caractérisé par le fait qu'**un ou plusieurs agents d'arrêt de réaction sont ajoutés à un dégazeur résiduel (4) connecté en aval du mélangeur-pétrisseur (1-4.3) et que ce fluide additionné sert en même temps d'agent de désorption pour le dégazage de solvant résiduel et/ou de monomère ou monomère,

6. Installation pour l'homopolymérisation ou la co-polymérisation de matières thermoplastiques et d'élastomères avec un mélangeur-pétrisseur (1-1.3) convenant pour la mise en oeuvre du procédé selon l'une des revendications 1 à 5, **caractérisée par le fait que** le mélangeur-pétrisseur présente les caractéristiques suivantes:
• un ou deux arbres de pétrissage disposés horizontalement et tournant dans le même sens ou en sens contraire,
• rapport longueur/diamètre (L/D) 0,5 à 3,5,
• les éléments de mélange et pétrissage dynamiques et statiques sont largement autonettoyants et arrivent aux bords, pour que soient évités les zones non mélangées et les attachements.
• le rétromélange a lieu intérieurement grâce à la réalisation et disposition correspondante des éléments de mélange, de transport et de pétrissage ou le mélangeur-pétrisseur (1.3) étant équipé d'un dispositif de retour externe (9) ou le rétromélange ayant lieu via des points de dosage d'alimentation répartis axialement.

7. Installation selon la revendication 6, **caractérisée par le fait que** pour la décharge du produit est directement montée sur le mélangeur-pétrisseur (1-1.3) une vis de décharge à un ou deux arbres (3-3.2, 9).

8. Installation selon la revendication 7, **caractérisée par le fait que** la vis sans fin (34.2, 9) est équipée d'une zone de mélange (7) par l'intermédiaire de laquelle peuvent être additionnés au mélange des agents d'arrêt de réaction ou des adjuvants.

9. Installation selon la revendication 7 ou 8, **caractérisée par le fait que** la vis de décharge (3-3.2, 9) est équipée d'une zone d'arrêt étanche aux gaz protégeant contre la pression ou le vide.

10. Installation selon au moins l'une des revendications 6 à 9, **caractérisée par le fait qu'**en aval du dispositif de retour externe (9) ou des vis de décharge (34.2) est connectée une pompe à roue dentée (12).

11. Installation selon la revendication 10, **caractérisée par le fait que** la pompe à roue dentée (12, 21) communiqué, sur le plan de la technique de commande, avec un moteur (M) pour le mélangeur-pétrisseur (11.3).

12. Installation selon au moins l'une des revendications 6 à 11, **caractérisée par le fait que** la vis sans fin (3-3.2, 9) est suivie d'un dégazeur (4) destiné à dégazer le produit.

13. Installation selon la revendication 12, **caractérisée par le fait qu'**avant ou dans le dégazeur (4) peuvent être ajoutés dans le mélange, par l'intermédiaire d'un conduit (15), des agents d'arrêt de réaction/stabilisateurs.

14. Installation selon la revendication 12 ou 13, **caractérisée par le fait qu'**au dégazeur (4) est raccordée par bride une vis de décharge (20).

15. Installation selon les revendications 6 à 14, **caractérisée par le fait que** la vis de décharge (3-3.2, 9) est optionnellement suivie d'un réservoir de vieillissement (11) destiné à la réaction de la part de monomère résiduelle.
